# EUROPÄISCHE PATENTSCHRIFT

(11) **EP 1 726 395 B1**
(45) Veröffentlichungstag und Bekanntmachung des Hinweises auf die Patenterteilung: **27.01.2010**
(21) Anmeldenummer: 06113629.7
(22) Anmeldetag: 08.05.2006
(51) Int. Cl.: B23K 9/09

(54) **Schweissstromquelle und Verfahren zum Mig/Mag-Schweissen**
Welding power supply and procedure for MIG/MAG welding
Alimentation électrique pour soudage et procédé de soudage du type MIG/MAG

(30) Priorität: 27.05.2005 DE 102005024802
(43) Veröffentlichungstag der Anmeldung: 29.11.2006
(73) Patentinhaber: EWM Hightec Welding GmbH, 56271 Mündersbach (DE)
(72) Erfinder: Szczesny, Michael, 56235 Ransbach-Baumbach (DE)
(74) Vertreter: Cohausz & Florack

(56) Entgegenhaltungen:
- EP-A- 1 384 546
- US-A- 5 406 052
- US-A- 6 013 896
- US-A1- 2005 098 550

## Beschreibung

Die Erfindung betrifft ein Verfahren und eine Vorrichtung zum MIG/MAG-Lichtbogenschweißen bei dem in einer ersten Betriebsphase während einer vorgegebenen ersten Zeitdauer (ts1) ein erster Lichtbogenbetriebszustand und bei dem in einer zweiten Betriebsphase während einer vorgegebenen zweiten Zeitdauer (tp1) ein zweiter Lichtbogenbetriebszustand aufrechterhalten wird, wobei zur Beaufschlagung des Schweissprozesses wechselweise zu bestimmten vorgebbaren Zeitpunkten zwischen den beiden Betriebszuständen umgeschaltet wird.

Beim Lichtbogenschweißen unterscheidet man je nach eingestellten Schweißparametern unterschiedliche Materialübergangsformen, sogenannte Lichtbogenbetriebszustände. Im unteren Leistungsbereich, d.h. bei niedrigen Stromstärken und Lichtbogenspannungen tritt als Betriebszustand der sogenannte Kurzlichtbogen auf. In diesem Zustand bildet sich unter dem Einfluss der Lichtbogenwärme am Elektrodenende ein kleiner Tropfen, der wegen der Kürze des Lichtbogens schon bald Kontakt mit dem Schmelzbad bekommt. Es entsteht dann ein Kurzschluss, so dass der Lichtbogen erlischt. Der Tropfen wird durch die Oberflächenspannungen des Schmelzbads am Drahtende abgesaugt und anschließend zündet der Lichtbogen wieder. Dieser Vorgang wiederholt sich je nach verwendetem Schutzgas in Abständen von ca. 20 bis 100 mal in der Sekunde. Beim Betriebszustand des Kurzlichtbogens handelt es sich um einen relativ kalten Prozess, d.h. es wird wenig Wärme in den Schweißprozess eingebracht.

Davon zu unterscheiden ist der Betriebszustand des Impulslichtbogens, welcher auftritt, wenn statt des gleichförmigen Stroms ein impulsförmiger Strom zum Schweißen verwendet wird. Dabei wird aufgrund des sogenannten Pinch-Effekts, d.h. unter Einwirkung der Lorenzkraft, die eine aus dem umgebenden Magnetfeld resultierende, radial nach innen gerichtete Kraft darstellt, das schmelzflüssige Elektrodenende eingeschnürt und einzelne Tropfen von diesem abgelöst, d.h. in der Impulsphase geht jeweils ein Tropfen von der Elektrodenspitze ab. Somit kommt es zu einem feintröpfigen, spritzerarmen Schweißprozess, bei dem ein vergleichsweise höherer Wärmeeintrag als beim Kurzlichtbogen in den Schweißprozess erfolgt.

Aus der Praxis ist ein Verfahren bzw. eine Vorrichtung zum MIG/MAG-Schweißen bekannt, wie sie der eingangs genannten Art entspricht. Das hieraus bekannte Verfahren sieht vor, abwechselnd einen ersten Lichtbogenbetriebszustand (Impulslichtbogen) und einen zweiten Lichtbogenzustand (Kurzlichtbogen) aufrechtzuerhalten. Durch Kombination der beiden Lichtbogenbetriebszustände können die positiven Eigenschaften beider Prozesse genutzt werden, ohne gleichzeitig ihre Nachteile in Kauf nehmen zu müssen: während der Impulslichtbogenphase wird für den notwendigen Wärmeeintrag und damit für den Einbrand gesorgt, während in der Kurzlichtbogenphase das Schweißbad abgekühlt wird. Dieser Prozess erlaubt das Schweißen von sehr dünnen Blechen und ist besonders beim Schweißen von Aluminium oder hochlegierten Werkstoffen bevorzugt einsetzbar. Der Wechsel zwischen den beiden Lichtbogenbetriebszuständen erfolgt bei dem bekannten Verfahren jeweils nach dem Ablauf bestimmter eingestellter Zeiten. Allerdings kommt es beim Übergang zwischen den Betriebszuständen zu unkontrolliertem Materialübergang und somit zu einem unbefriedigendem Schweißverhalten.

Der Erfindung liegt davon ausgehend die Aufgabe zugrunde, ein Verfahren bzw. eine Vorrichtung der eingangs genannten Art hinsichtlich des Schweißverhaltens weiter zu verbessern.

Diese Aufgabe wird bei einem Verfahren der eingangs genannten Art dadurch gelöst, dass die Umschaltung auf den nachfolgenden Betriebszustand synchronisiert mit einem Zeitpunkt des Materialüberganges im aktuellen Betriebszustand erfolgt bzw. bei einer Vorrichtung der eingangs genannten Art dadurch, dass die Stromquelle Detektormittel für den Zeitpunkt des Materialüberganges im Lichtbogen aufweist, derart, dass die Umschaltung auf den nachfolgenden Betriebszustand synchronisiert mit einem Zeitpunkt des Materialüberganges im aktuellen Betriebszustand erfolgt.

Die Erfindung zeichnet sich dadurch aus, dass eine periodische Umschaltung zwischen den beiden Lichtbogenbetriebszuständen erfolgt, welche orientiert ist an dem tatsächlichen Materialübergang im Lichtbogen. Erfindungsgemäß wird detektiert, zu welchem Zeitpunkt der Materialübergang jeweils erfolgt, so dass davon ausgehend synchronisiert mit dem ermittelten Zeitpunkt des Materialübergangs der Übergang vom aktuellen in den nachfolgenden Betriebszustand des Lichtbogens erfolgt.

Durch eine solche synchronisierte Umschaltung wird erreicht, dass ein kontrollierter Materialübergang erhalten bleibt, so dass sich das Schweißverhalten verbessert. Der synchronisierte Übergang vom Kurzlichtbogen zum Impulslichtbogen erfolgt immer unmittelbar nach dem Materialübergang im Kurzschluss während der Kurzlichtbogenphase. Der Übergang wird also von dem Detektormittel durch das Auflösen des Kurzschlusses detektiert. Demgegenüber erfolgt der synchronisierte Wechsel vom Impulslichtbogen zum Kurzlichtbogen immer nach einem vorherigen Materialübergang im Stromimpuls derart, dass nach dem Ende des Stromimpulses der Wechsel zurück zum Kurzlichtbogen erfolgt.

Eine bevorzugte Ausführungsform der Erfindung sieht vor, dass im Anschluss an den Zeitpunkt des Materialüberganges im aktuellen Betriebszustand vor dem Übergang in den nachfolgenden Betriebszustand eine voreinstellbare Totzeit (ts2, tp2) verbleibt.

Eine solche Totzeit kann sowohl beim Übergang vom Kurzlichtbogen zum Impulslichtbogen als auch beim Übergang vom Impulslichtbogen zum Kurzlichtbogen vorgesehen sein, um einen definierten Übergang zwischen den Lichtbogenbetriebszuständen zu schaffen. Dabei können die Totzeiten innerhalb eines Bereichs von einigen Millisekunden gewählt werden und je nach Übergangsrichtung (vom Kurzlichtbogen zum Impulslichtbogen bzw. vom Impulslichtbogen zum Kurzlichtbogen) unterschiedlich dimensioniert sein.

In einer weiteren bevorzugten Ausführungsform der Erfindung ist vorgesehen, dass die vorgegebene erste Zeitdauer (ts1) des ersten Lichtbogenbetriebszustands bzw. die vorgegebene zweite Zeitdauer (tp1) des zweiten Lichtbogenbetriebszustands jeweils zwischen 20 und 500 ms betragen. Durch die entsprechende Auswahl der Zeiten für den ersten bzw. zweiten Lichtbogenbetriebszustand lässt sich eine günstige Anpassung an die Schweißaufgabe hinsichtlich des Energieeintrags erreichen.

Insbesondere ist vorgesehen, dass das Verhältnis aus der vorgegebenen ersten Zeitdauer (ts1) des ersten Lichtbogenbetriebszustands und der vorgegebenen zweiten Zeitdauer (tp1) des zweiten Lichtbogenbetriebszustands in Form einer Kennlinie in Abhängigkeit von der Drahtvorschubgeschwindigkeit vorgebbar, insbesondere vorprogrammierbar, ist. Dadurch, dass das Verhältnis der beiden Zeiten (Kurzlichtbogenzeit, Impulslichtbogenzeit) über den Parameter der Drahtgeschwindigkeit frei verändert bzw. programmiert werden kann, bedeutet dies, dass bei kleinen Drahtfördergeschwindigkeiten des Schweißdrahts der Schweißprozess eine längere Kurzlichtbogenphase und eine kürzere Impulslichtbogenphase aufweist. Erhöht man demgegenüber die Drahtgeschwindigkeit, so verändert sich automatisch das Verhältnis von Kurzlichtbogenzeit zu Impulslichtbogenzeit derart, dass die Impulslichtbogenphase länger als die Kurzlichtbogenphase wird und entsprechend mehr Energie eingetragen wird. Im Extremfall kann nur entweder die Kurzlichtbogenphase oder nur die Impulslichtbogenphase genutzt werden, wenn eine der beiden genannten Zeiten zu 0 wird.

Die Kennlinie ist frei programmierbar und kann für verschiedene Kombinationen aus Material, Drahtdurchmesser und Gasart abgespeichert bzw. aufgerufen werden.

Die gilt auch für die voreinstellbaren Totzeiten.

Dadurch, dass nach einer weiteren bevorzugten Ausführungform sämtliche Schweißparameter in einem geeigneten Steuermittel digital in einem Mikroprozessor programmierbar, abspeicherbar und durch die Auswahl von Material, Drahtdurchmesser und Gasart vom Schweißer auf einfache Art abrufbar sind, lässt sich eine Verbesserung der Handhabbarkeit des Schweißgerätes erreichen.

Die Erfindung wird im Folgenden anhand von Diagrammen näher erläutert.

Dabei zeigen
Figur 1 den zeitlichen Verlauf des Schweißstromes Is bei einem sich aus zwei Lichtbogenbetriebszuständen zusammensetzenden Schweißprozess;
Figur 2 einen zeitlichen Ausschnitt aus der Darstellung nach Figur 1;
Figur 3 ein Beispiel für eine Kennliniendarstellung im Zusammenhang mit der Erfindung.

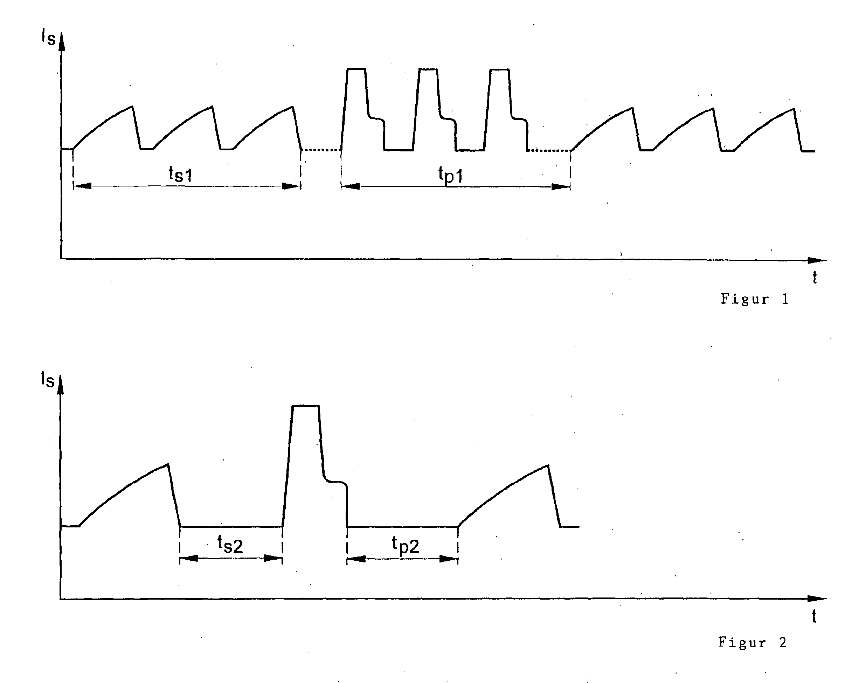

Figur 1 zeigt den zeitlichen Verlauf des Schweißstroms Is in einem Schweißprozess, der sich aus zwei Lichtbogenbetriebszuständen zusammensetzt. Hierbei handelt es sich um einen ersten Lichtbogenbetriebszustand, welcher dem Kurzlichtbogenzustand entspricht und während einer vorgegebenen ersten Zeitdauer ts1 aufrechterhalten wird. Zu erkennen ist jeweils der Anstieg des Schweißstromes während der Tropfenbildungsphase. Nachdem der Tropfen Kontakt mit dem Schmelzbad bekommt, entsteht ein Kurzschluss und somit ein steiler Stromabfall verbunden mit dem Materialübergang. Anschließend zündet der Lichtbogen wieder und der Prozess wiederholt sich periodisch.

Der in Figur 1 dargestellte zweite Lichtbogenbetriebszustand ist derjenige des Impulslichtbogens, bei dem zunächst ein steiler Stromanstieg in Folge des impulsförmigen Stroms erfolgt, bis sich unter Einwirkung des Pinch-Effekts in der Impulsphase ein Tropfen von der Elektrodenspitze ablöst und es dabei zum Materialübergang kommt. Die Dauer der zweiten Betriebsphase ist in Figur 1 mit tp1 dargestellt. Beide beschriebenen Lichtbogenbetriebszustände wechseln sich periodisch ab.

Figur 2 zeigt einen Ausschnitt aus dem Diagramm nach Figur 1 zum Zeitpunkt des Übergangs zwischen dem Kurzlichtbogenbetriebszustand und dem Impulslichtbogenzustand bzw. beim Übergang vom Impulslichtbogenzustand zum Kurzlichtbogenzustand.

Der Übergang vom Kurzlichtbogenzustand zum Impulslichtbogenzustand wird dadurch initiiert, dass das Auflösen der Kurzschlussphase beim Kurzlichtbogen detektiert wird und nach Ablauf einer von außen vorgebbaren Totzeit ts2 der Wechsel zum Impulslichtbogenzustand erfolgt. Der Wechsel vom Impulslichtbogenzustand zum Kurzlichtbogenzustand zurück erfolgt nach Detektierung eines vorherigen Materialübergangs im Stromimpuls, wobei nach dem Ende des Stromimpulses eine einstellbare Totzeit tp2 gestartet wird, nach deren Ablauf der Wechsel zurück zum Kurzlichtbogen erfolgt. Gemäß der Erfindung erfolgt also die Umschaltung auf den nachfolgenden Betriebszustand immer synchronisiert mit Zeitpunkt des Materialübergangs im aktuellen Betriebszustand, und zwar unabhängig davon, ob der aktuelle Betriebszustand der Kurzlichtbogenzustand oder der Impulslichtbogenzustand ist. Die jeweiligen Totzeiten ts2 zwischen Kurzlichtbogenzustand und Impulslichtbogenzustand bzw. tp2 zwischen Impulslichtbogenzustand und Kurzlichtbogenzustand sind dabei frei programmierbar ebenso wie das Verhältnis der Kurzlichtbogenzeit ts1 zur Impulslichtbogenzeit tp2.

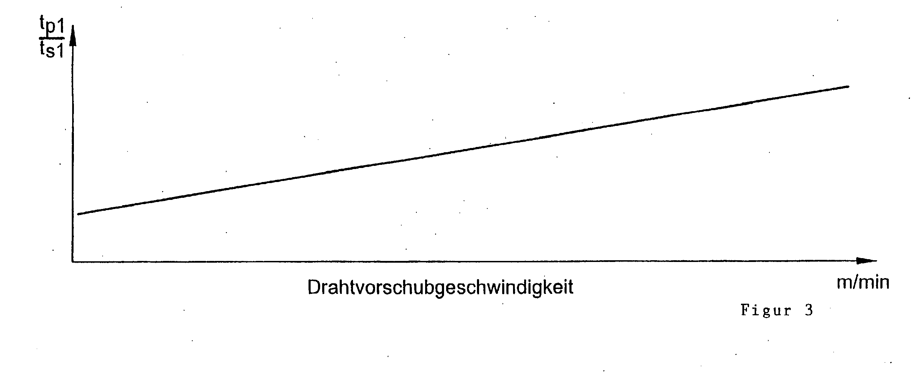

Figur 3 zeigt die Abhängigkeit des Verhältnisses der beiden Lichtbogenzustandszeiten ts1 für den Kurzlichtbogen und tp1 für den Impulslichtbogen in Abhängigkeit von dem Parameter Drahtvorschubgeschwindigkeit. Die in Figur 3 dargestellte Kennlinie kann dabei beliebig programmiert werden und an die entsprechende Schweißaufgabe angepasst sein. Je nach Vorgabe der Kennlinie lässt sich bei einer Veränderung der Drahtvorschubgeschwindigkeit somit automatisch das Verhältnis aus Impulslichtbogenzustandslänge tp1 und Kurzlichtbogenzustandslänge ts1 verändern, so dass bei kleinen Drahtvorschubgeschwindigkeiten eine längere Kurzlichtbogenphase und eine kürze Impulslichtbogenphase stattfindet, während bei höherer Drahtvorschubgeschwindigkeit eine längere Impulslichtbogenphase und eine kürzere Kurzlichtbogenphase stattfindet. Je nach Kombination aus Material, Drahtdurchmesser und Gasart ergibt sich eine andere Kennlinie.

## Patentansprüche

1. Verfahren zum MIG/MAG Lichtbogenschweißen, bei dem in einer ersten Betriebsphase während einer vorgegebenen ersten Zeitdauer (ts1) ein erster Lichtbogenbetriebszustand und bei dem in einer zweiten Betriebsphase während einer vorgegebenen zweiten Zeitdauer (tp1) ein zweiter Lichtbogenbetriebszustand aufrechterhalten wird, wobei zur Beaufschlagung des Schweissprozesses wechselweise zu bestimmten vorgebbaren Zeitpunkten zwischen den beiden Betriebszuständen umgeschaltet wird,
**dadurch gekennzeichnet, dass** die Umschaltung auf den nachfolgenden Betriebszustand synchronisiert mit einem Zeitpunkt des Materialüberganges im aktuellen Betriebszustand erfolgt.

2. Verfahren nach Anspruch 1, **dadurch gekennzeichnet, dass** der erste Lichtbogenbetriebszustand der Kurzlichtbogenzustand und dass der zweite Lichtbogenbetriebszustand der Impulslichtbogenzustand ist.

3. Verfahren nach Anspruch 1 oder Anspruch 2, **dadurch gekennzeichnet, dass** im Anschluß an den Zeitpunkt des Materialüberganges im aktuellen Betriebszustand vor dem Übergang in den nachfolgenden Betriebszustand eine voreinstellbare Totzeit ( ts2, tp2) verbleibt.

4. Verfahren nach Anspruch 1 oder Anspruch 2, **dadurch gekennzeichnet, dass** die Drahtfördergeschwindigkeit während des ersten Lichtbogenbetriebszustands des Kurzlichtbogenzustands (ts1) und während des zweiten Lichtbogenbetriebszustands des Impulslichtbogenzustands (tp1) konstant ist.

5. Verfahren nach Anspruch 3, **dadurch gekennzeichnet, dass** die voreinstellbare Totzeit im Bereich von 1 ms bis 10 ms liegt.

6. Verfahren nach Anspruch 1, **dadurch gekennzeichnet, dass** die vorgegebene erste Zeitdauer (ts1) des ersten Lichtbogenbetriebszustandes bzw. die vorgegebene zweite Zeitdauer (tp1) des zweiten Lichtbogenbetriebszustandes jeweils zwischen 20 und 500 ms beträgt.

7. Verfahren nach einem der vorhergehenden Ansprüche, **dadurch gekennzeichnet, dass** das Verhältnis aus der vorgegebenen ersten Zeitdauer (ts1) des ersten Lichtbogenbetriebszustandes und der vorgegebenen zweiten Zeitdauer (tp1) des zweiten Lichtbogenbetriebszustandes frei vorgebbar, insbesondere vorprogrammierbar, ist.

8. Verfahren nach einem der vorhergehenden Ansprüche, **dadurch gekennzeichnet, dass** die vorgegebene erste Zeitdauer (ts1) des ersten Lichtbogenbetriebszustandes und/oder die vorgegebene zweite Zeitdauer (tp1) des zweiten Lichtbogenbetriebszustandes und/oder die voreinstellbare Totzeit (ts2 und/oder tp2) in Form einer Kennlinie in Abhängigkeit von der Drahtvorschubgeschwindigkeit vorgebbar und damit veränderbar ist/sind.

9. Verfahren nach einem der vorhergehenden Ansprüche, **dadurch gekennzeichnet, dass** das Verhältnis aus der vorgegebenen ersten Zeitdauer (ts1) des ersten Lichtbogenbetriebszustandes und der vorgegebenen zweiten Zeitdauer (tp1) des zweiten Lichtbogenbetriebszustandes in Form einer Kennlinie in Abhängigkeit von der Drahtvorschubgeschwindigkeit vorgebbar, insbesondere vorprogrammierbar, ist.

10. Verfahren nach einem der vorhergehenden Ansprüche, **dadurch gekennzeichnet, dass** die Kennlinien in Abhängigkeit von Schweißparametern, insbesondere Material, Drahtdurchmesser, und Gasart sowie deren Kombinationen aufgerufen werden.

11. Verfahren nach einem der vorhergehenden Ansprüche, **dadurch gekennzeichnet, dass** die Steuer- und Regelalgorithmen der Stromquelle und deren Kennlinien digital mit Hilfe von Software realisiert sind.

12. Vorrichtung zum MIG/MAG Lichtbogenschweißen, mit einer den Schweißprozeß speisenden Stromquelle, die derart steuerbar ist, dass in einer ersten Betriebsphase während einer vorgegebenen ersten Zeitdauer (ts1) ein erster Lichtbogenbetriebszustand und bei dem in einer zweiten Betriebsphase während einer vorgegebenen zweiten Zeitdauer (tp1) ein zweiter Lichtbogenbetriebszustand aufrechterhalten werden, wobei die Stromquelle Umschaltmittel zum wechselweisen Umschalten zwischen den Betriebszuständen aufweist,
**dadurch gekennzeichnet, dass** die Stromquelle Detektormittel für den Zeitpunkt des Materialüberganges im Lichtbogen aufweist derart, dass die Umschaltung auf den nachfolgenden Betriebszustand synchronisiert mit einem Zeitpunkt des Materialüberganges im aktuellen Betriebszustand erfolgt.

13. Vorrichtung nach einem der vorhergehenden Ansprüche, **dadurch gekennzeichnet, dass** das Detektormittel zur Detektierung des Materialüberganges im Kurzlichtbogenzustand geeignet ist.

14. Vorrichtung nach einem der vorhergehenden Ansprüche, **dadurch gekennzeichnet, dass** das Detektormittel zur Detektierung des Materialüberganges im Impulslichtbogenzustand geeignet ist.

15. Vorrichtung nach einem der vorhergehenden Ansprüche, **dadurch gekennzeichnet, dass** Zeitvorgabemittel zur jeweiligen Vorgabe der ersten Zeitdauer (ts1) und/oder der zweiten Zeitdauer (tp1) und/oder einer der Totzeiten (ts2 und/oder tp2) vorgesehen sind.

## Claims

1. A method for MIG/MAG arc welding, in the case of which a first arc operating state is maintained in a first operating phase during a predetermined first time period (ts1) and a second arc operating state is maintained in a second operating phase during a predetermined second time period (tp1), wherein at certain points in time, which can be predetermined, an alternate switch-over takes place between the two operating states for the purpose of acting upon the welding process,
**characterized in that** the switch-over to the subsequent operating state is carried out synchronized with a point in time of the material transition in the current operating state.

2. The method according to claim 1, **characterized in that** the first arc operating state is the short arc state and that the second arc operating state is the pulsed arc state.

3. The method according to claim 1 or claim 2, **characterized in that** a presettable down time (ts2, tp2) remains following the point in time of the material transition in the current operating state prior to the transition into the subsequent operating state.

4. The method according to claim 1 or claim 2, **characterized in that** the wire conveying speed during the first arc operating state of the short arc state (ts1) and during the second arc operating state of the pulsed arc state (tp1) is constant.

5. The method according to claim 3, **characterized in that** the presettable down time lies in the range of from 1 ms to 10 ms.

6. The method according to claim 1, **characterized in that** the predetermined first time period (ts1) of the first arc operating state or the predetermined second time period (tp1) of the second arc operating state, respectively, is in each case between 20 and 500 ms.

7. The method according to one of the preceding claims, **characterized in that** the ratio of the predetermined first time period (ts1) of the first arc operating state and of the predetermined second time period (tp1) of the second arc operating state can be predetermined freely, in particular preprogrammed.

8. The method according to one of the preceding claims, **characterized in that** the predetermined first time period (ts1) of the first arc operating state and/or the predetermined second time period (tp1) of the second arc operating state and/or the presettable down time (ts2 and/or tp2) can be predetermined and thus changed in the form of a characteristic curve as a function of the wire feed speed.

9. The method according to one of the preceding claims, **characterized in that** the ratio of the predetermined first time period (ts1) of the first arc operating state and of the predetermined second time period (tp1) of the second arc operating state can be predetermined, in particular preprogrammed, in the form of a characteristic curve as a function of the wire feed speed.

10. The method according to one of the preceding claims, **characterized in that** the characteristic curves are accessed as a function of welding parameters, in particular material, wire diameter and gas type as well as the combinations thereof.

11. The method according to one of the preceding claims, **characterized in that** the control and regulating algorithms of the current source and of the characteristic curves thereof are realized digitally by means of software.

12. A device for MIG/MAG arc welding, comprising a current source, which feeds the welding process and which can be controlled in such a manner that a first arc operating state is maintained in a first operating phase during a predetermined first time period (ts1) and a second arc operating state is maintained a second operating phase during a predetermined second time period (tp1), wherein the current source encompasses switch-over means for an alternating switch-over between the operating states,
**characterized in that** the current source encompasses detector means for the point in time of the material transition in the arc in such a manner that the switch-over to the subsequent operating state takes place so as to be synchronized with a point in time of the material transition in the current operating state.

13. The device according to one of the preceding claims, **characterized in that** the detector means is suitable for detecting the material transition in the short arc state.

14. The device according to one of the preceding claims, **characterized in that** the detector means is suitable to detect the material transition in the pulsed arc state.

15. The device according to one of the preceding claims, **characterized in that** provision is made for timing means for respectively predetermining the first time period (ts1) and/or the second time period (tp1) and/or one of the down times (ts2 and/or tp2).

## Revendications

1. Procédé pour le soudage à l'arc MIG/MAG, dans lequel au cours d'une première phase de fonctionnement, pendant une première durée (ts1) prédéfinie, un premier mode de fonctionnement de l'arc est maintenu et dans lequel au cours d'une seconde phase de fonctionnement, pendant une seconde durée (tp1) prédéfinie, un second mode de fonctionnement de l'arc est maintenu, sachant que pour réaliser le processus de soudage, on peut commuter au choix à des moments précis prédéfinissables entre les deux modes de fonctionnement, **caractérisé en ce que** le passage au mode de fonctionnement suivant s'effectue de manière synchronisée avec un moment de passage de matériau dans le mode de fonctionnement en cours.

2. Procédé selon la revendication 1, **caractérisé en ce que** le premier mode de fonctionnement de l'arc est le mode à l'arc court et le second mode de fonctionnement de l'arc est le mode à l'arc par impulsions.

3. Procédé selon la revendication 1 ou 2, **caractérisé en ce qu'**un temps mort (ts2, tp2) suit le moment du passage de matériau dans le mode de fonctionnement en cours avant le passage au mode de fonctionnement suivant.

4. Procédé selon la revendication 1 ou 2, **caractérisé en ce que** la vitesse d'avance du fil est constante pendant le premier mode de fonctionnement de l'arc du mode à l'arc court (ts1) et pendant le second mode de fonctionnement de l'arc du mode à l'arc par impulsions (tp1).

5. Procédé selon la revendication 3, **caractérisé en ce que** le temps mort préréglable est situé entre 1 ms à 10 ms.

6. Procédé selon la revendication 1, **caractérisé en ce que** la première durée (ts1) prédéfinie du premier mode de fonctionnement de l'arc respectivement la seconde durée (tp1) prédéfinie du second mode de fonctionnement de l'arc est située entre 20 et 500 ms.

7. Procédé selon l'une des revendications précédentes, **caractérisé en ce que** le rapport de la première durée (ts1) prédéfinie du premier mode de fonctionnement de l'arc et la seconde durée (tp1) prédéfinie du second mode de fonctionnement de l'arc est prédéfinissable librement, en particulier pré-programmable.

8. Procédé selon l'une des revendications précédentes, **caractérisé en ce que** le rapport de la première durée (ts1) prédéfinie du premier mode de fonctionnement de l'arc et/ou la seconde durée (tp1) prédéfinie du second mode de fonctionnement de l'arc et/ou le temps mort (ts2 et/ou tp2) préréglable est/sont prédéfinissable(s) sous forme d'une caractéristique en fonction de la vitesse d'avance du fil et modifiable(s) avec celle-ci.

9. Procédé selon l'une des revendications précédentes, **caractérisé en ce que** le rapport de la première durée (ts1) prédéfinie du premier mode de fonctionnement de l'arc et de la seconde durée (tp1) prédéfinie du second mode de fonctionnement de l'arc est prédéfinissable sous forme d'une caractéristique en fonction de la vitesse d'avance du fil, en particulier pré-programmable.

10. Procédé selon l'une des revendications précédentes, **caractérisé en ce que** les caractéristiques peuvent être appelées en fonction des paramètres de soudage, en particulier du matériau, du diamètre du fil et du type de gaz ainsi que leurs combinaisons.

11. Procédé selon l'une des revendications précédentes, **caractérisé en ce que** les algorithmes de commande et de réglage de la source de courant et leurs caractéristiques sont réalisées de manière numérique à l'aide d'un logiciel.

12. Dispositif pour le soudage à l'arc MIG/MAG comprenant une source de courant alimentant le processus de soudage qui est ainsi commandée qu'au cours d'une première phase de fonctionnement pendant une première durée (ts1) prédéfinie, un premier mode de fonctionnement de l'arc est maintenu et au cours d'une seconde phase de fonctionnement pendant une seconde durée (tp1) prédéfinie, un second mode de fonctionnement de l'arc est maintenu, sachant que la source de courant présente des moyens de commutation pour la commutation réciproque entre les modes de fonctionnement, **caractérisé en ce que** la source de courant présente des moyens détecteurs pour le moment du passage de matériau, de telle manière que la commutation au mode de fonctionnement suivant s'effectue de manière synchronisée avec un moment de passage de matériau dans le mode de fonctionnement en cours.

13. Procédé selon l'une des revendications précédentes, **caractérisé en ce que** le moyen détecteur est approprié pour détecter le passage de matériau dans le mode à l'arc court.

14. Procédé selon l'une des revendications précédentes, **caractérisé en ce que** le moyen détecteur est approprié pour détecter le passage de matériau dans le mode à l'arc par impulsions.

15. Procédé selon l'une des revendications précédentes, **caractérisé en ce que** des moyens de temps alloué sont prévus pour l'allocation respective de la première durée (ts1) et/ou de la seconde durée (tp1) et/ou de l'un des temps morts (ts2 et/ou tp2).
